# EUROPEAN PATENT SPECIFICATION

(11) **EP 0 542 108 B1**
(45) Date of publication and mention of the grant of the patent: **24.09.1997**
(21) Application number: 92118835.5
(22) Date of filing: 04.11.1992
(51) Int. Cl.: C08K 5/00

(54) **Stabilizers for plastic materials**
Stabilisatoren für Kunststoffe
Stabilisant pour les matériaux plastiques

(30) Priority: 12.11.1991 US 791744; 09.10.1992 US 955000
(43) Date of publication of application: 19.05.1993
(73) Proprietor: Ciba Specialty Chemicals Holding Inc., 4057 Basel (CH)
(72) Inventor: Laermer, Stuart Frank, Glen Rock, N.J.07452 (US); Rizzo, Vincent Joseph, North Arlington, N.J.07032 (US)

(56) References cited:
- EP-A- 0 263 524
- DE-A- 3 903 218
- PLASTICS AND RUBBER PROC. & APPL., vol. 14, 1990, LONDON, GB, pages 235-239; S.F. LAERMER, F.NABHOLZ
- PATENT ABSTRACTS OF JAPAN, vol. 3, no. 59 (C-46); & JP-A-54 034 352

## Description

This invention relates to stabilizers for plastic materials, and more specifically, to stabilizing mixtures to improve the colour and the processing of plastic materials.

Reducing oxidation and stabilizing the colour of polymers during processing is important to the plastics industry. During processing into articles polymers are subjected to high temperatures and pressures which can have an adverse effect on the molecular weight and physical properties of the polymers and on the appearance of the finished articles made from these polymers. The need exists, therefore, for antioxidant and colour stabilizing materials which minimize oxidation and colour instability.

United States Patent No. 4,806,580 discloses stabilizer mixtures for stabilizing plastic material, e.g. polyethylene or polypropylene, in processing. The disclosed stabilizer mixtures contain (a) a chroman derivative, e.g. dl-α-tocopherol, and (b) an organic phosphite or phosphonite in a weight ratio (a:b) of 1:5 to 1:14. In addition to such stabilizer mixtures, customary amounts of further stabilizing additives, e.g. calcium stearate and distearyl thiodipropionate, can also be incorporated in the plastic material.

Japanese Patent Publication (Kokai) No. 86036/1987 discloses stabilized polyolefin compositions, e.g. polypropylene, containing, per 100 parts by weight of the polyolefin, 0.005 to 0.5 parts by weight of a compound selected from the vitamin E group and 0.01 to 0.5 parts by weight of a bisaryl pentaerythritol diphosphite(I) or a triaryl phosphite(II).

Japanese Patent Publication (Kokai) No. 55043/1979 discloses stabilized polyolefin compositions, e.g. polyethylene and polypropylene, containing a compound from the vitamin E group and various phosphites. In Examples 1-12 thereof the ratios of vitamin E:phosphite evaluated in polypropylene are 1:1.67 and 1:3.33.

It is an object of the present invention to provide stabilizer mixtures for plastic materials, e.g. those which contain polyethylene, to improve the processing and colour stability.

Accordingly, the present invention provides a stabilizing formulation for plastic materials, e.g. those containing polyethylene, consisting essentially of
(a) from 10 to 50 percent by weight of α-tocopherol;
(b) up to 50 percent by weight of polyethylene glycol and/or
(c) up to 50 percent by weight of glycerol monocaprylate caprate;
and optionally also (d) up to 20 percent by weight of glycerin, whereby the total percent by weight of the two, three and four components, as appropriate, amounts to 100.

The term "plastic material", where this contains polyethylene, as used herein refers to those plastic materials which contain only polyethylene, i.e. homopolymers, including but not limited to high density polyethylene, low density polyethylene, linear low density polyethylene and ultra high molecular weight polyethylene, copolymers which contain as one of the repeating units the polyethylene monomer moiety, or blends of polyethylene and another polymer. Those skilled in the art will appreciate and will know how to make the different types of copolymers that can be formed with polyethylene, including alternating, block and graft copolymers as well as how to make the blends of polyethylene with other polymers.

The stabilizing formulations of the present invention themselves may be produced by simple physical mixing of the components with each other in the desired weight ratio. Preferably an intimate, homogeneous mixture of the components is thereby achieved. The methods of admixture and the equipment used for this purpose are well known to the person skilled in the art. The physical mixing process represents a further aspect of the present invention.

The methods of incorporating the stabilizing mixtures of the present invention into the plastic materials to be stabilized thereby may be effected by the conventional methods which are generally utilized for the stabilization of plastic materials by additives. These methods are well known per se by persons skilled in the pertinent art and may involve the incorporation of the stabilizing formulation as such or of the components individually, in the correct ratio, at any convenient stage of the processing of the plastic material.

In each case the stabilizing formulation according to the present invention is generally incorporated in a concentration of from about 0.001 to about 5%, preferably from 0.025 to 0.075%, by weight, based on the weight of the plastic material to be stabilized.

The present invention comprises as a further aspect plastic materials, e.g. those containing polyethylene, and articles manufactured therefrom, characterized in that they have been stabilized by incorporation therein of a stabilizing formulation in accordance with the present invention and as defined hereinabove. Moreover, the use of these stabilizing formulations for stabilizing plastic material, e.g. one containing polyethylene, also represents a further aspect of the present invention.

The stabilizing formulations according to the present invention are clear solutions, which remain so even after being frozen and then thawed, and may be produced by intimately mixing together the two, three or four components [(a) and (b); (a) and (c); (a), (b) and (c); (a), (b) and (d); (a), (c) and (d); or (a), (b), (c) and (d)], suitably by stirring in suitable equipment, until a clear solution results.

Particularly preferred such formulations are given in the following table:

**Table 1**

| **Component** | **Approx. Percentage by Weight of the Whole Formulation** | | | | |
|---|---|---|---|---|---|
| α-Tocopherol | 10 | 26 | 20 | 50 | 50 |
| Polyethylene glycol | 20 | 16 | 17 | - | 50 |
| Glycerol monocaprylate caprate | 50 | 42 | 43 | 50 | - |
| Glycerin | 20 | 16 | 20 | - | - |
| Total percent | 100 | 100 | 100 | 100 | 100 |
| Reference of the formulation | 202 C | 202 C-7 | 202 C-10 | 202 D | 202 F |

In relation to the above-described stabilizing formulations the term "plastic material" embraces not only the plastic materials containing polyethylene as described in particular hereinabove but also plastic materials, including thermoplastic materials, which include other types of polymers, such as polypropylene, polyvinyl chloride, polystyrenes and polyurethanes. Accordingly, these plastic materials are not limited to those containing polyethylene, or even to polyolefines. Blends of two or more different types of polymers or copolymers are naturally included in the "plastic materials" to be stabilized by the present stabilizing formulations. Preferably the plastic materials stabilized by the stabilizing formulations of the present invention are plastic materials containing polyethylene.

The present invention embraces the above-indicated process for producing these formulations, comprising, more particularly, mixing the above-defined two, three or four components, as appropriate, with each other until a clear solution is formed. Specific methods and equipment for this purpose are well known to the person skilled in the art.

The present stabilizing formulations improve the processing stability, colour stability and heat aging stability of the plastic materials in which they are incorporated. Furthermore, the methods of incorporating these stabilizing formulations into the plastic materials to be stabilized thereby may in this case too be effected by conventional methods which are generally utilized for the stabilization of plastic materials by additives and which are well known by persons skilled in the pertinent art. As indicated above, the stabilizing formulation is generally incorporated in a concentration of from about 0.001 to about 5% by weight, based on the weight of the plastic material to be stabilized, preferably in a concentration of 0.025 to 0.075% by weight.

The present invention comprises as further aspects plastic materials, and articles manufactured therefrom, characterized in that they have been stabilized by incorporation therein of a stabilizing formulation according to the present invention and as defined hereinbefore, and the use of these stabilizing formulations for stabilizing such plastic materials.

The following example illustrates the present invention in its various aspects.

### Example

### Stabilized Polyethylene Formulations

### Description and Scope of the Study

Formulations of high-density polyethylene (HDPE) and low-density polyethylene (LDPE) with various additives were prepared for this study. Neat, unstabilized HDPE resin was obtained from the Paxon company as Paxon 8-062. Neat, unstabilized LDPE resin was obtained from Quantum Chemicals as Quantum MN722. The various additives tested were used as received from the respective suppliers. Vitamin E (α-tocopherol, hereinafter designated conventionally as ATP) was obtained from Hoffmann-La Roche Inc. The formulations are shown in Table 2 below.

Samples were prepared by dry-blending the ingredients, extrusion compounding, extrusion of thin (0.030 in; = 0.0762 cm) tapes, multi-pass extrusion of samples for melt-index studies and injection molding of tensile bars (0.125 in; = 0.318 cm) and plaques (0.075 in; = 0.191 cm).

Samples were oven-aged at 120°C/15 days for HDPE and 90°C/15 days for LDPE.

### Sample Preparation

### A. Compounding

The formulations shown in Table 2 were tumble-blended for 10 to 15 minutes on a Patterson-Kelly twin-shell dry-blender.

Extrustion compounding was performed on a Davis-Standard extruder equipped with a 1 1/2 in. (3.81 cm) diameter, general-purpose mixing screw. A 20/40 mesh screen was employed. Extrusion was through an oval 1 1/2 x 1/4 in. (3.81 x 0.635 cm) die. Extrusion temperatures were:
- HDPE: 400-410°F (204-210°C) (barrel), 400°F (204°C) (die);
- LDPE: 320-330°F (160-166°C) (barrel), 300°F (149°C) (die);
Neat resins, Paxon 8-062 and Quantum MN722, were also processed through the extruder so that all materials would have the same heat history.

After extrustion compounding, the materials were chopped using a Nelmar 10 H.P. grinder equipped with 1/4 in. (0.635 cm) screens.

### B. Sample Extrusion for Melt Flow Index

The extruder was equipped with a 1 1/2 x 0.030 in. (3.81 x 0.076 cm) tapered die. Extrusion conditions were:
- HDPE: 400 to 450°F (204 to 232°C) barrel temperature (from feed end to die), 430°F (221°C) die temperature. Speed setting at 2 (out of 6, maximum). Head pressure ranged from 1500 to 2000 psi (105.5 to 140.6 kg/cm²)
- LDPE: 320 to 350°F (160 to 177°C) barrel temperature, no heat on die. Speed setting at 2. Head pressure ranged from 600 to 1200 psi (42.2 to 84.4 kg/cm²)

The material was cut into 1/4 to 1/2 in. (0.635 to 1.27 cm) pieces for the multi-pass extrusion study.

### C. Multi-Pass Extrusion

A portion of each material formulation was sequentially passed through the extruder four more times (total of five) under the same conditions noted above. Samples were taken after 1, 3 and 5 passes for melt-index studies and for colour comparison. The latter samples were mounted on a white background for colour comparison by eye.

### D. Injection Molding

The injection molding of test samples was performed on a New Britain 75-ton, reciprocating-screw machine equipped with a general-purpose screw. A standard ASTM (American Society for Testing and Materials: American National Standard) test mold was used producing tensile "dogbone" bars at 0.125 in. (0.318 cm) thickness and 1 1/2 in. x 5 in. x 0.075 in. (3.81 x 12.7 x 0.191 cm) plaques. Molding conditions were:
- HDPE: 475°F (246°C) barrel temperature. 18-second pressure-hold interval. 18-second cooling interval. Total ram travel 3 1/2 in. (8.89 cm). Mold at room temperature.
- LDPE: 350°F (176.7°C) barrel temperature. 7-second pressure-hold interval. 18-second cooling interval. 2 1/2 in. (6.35 cm) total ram travel.

### Testing

### A. Melt Index After Multi-Pass Extrusion

Melt index determinations on HDPE were performed in accordance with ASTM D1238, condition L. The conditions were modified upon intructions from the material vendor to: 230°C, 22,600 g weight. For LDPE, condition E was followed, 190°C, 2,160 g weight.

Three separate sample determinations were made for each HDPE and LDPE formulation subjected to five extruder passes. Melt index was determined for each after the first, third and fifth pass. It was observed that no significant melt-index change occurred by multi-processing the LDPE. All LDPE formulations were heat-aged for one hour at 450°F (232°C) in a capillary extruder and tested for melt index and optically compared for colour.

### B. Testing for Yellowness Index

Both 0.125 in. (0.318 cm) and 0.075 in. (0.191 cm) thick samples were tested for yellowness index in accordance to ASTM D1925. A MacBeth spectrophotometer Model 1500 was employed for these measurements. A standard magnesium oxide plaque was used for the colour measurements both as a calibration standard and as a background to the samples as prescribed in the ASTM test method. CIE (Commission Internationale de L'Eclairage) light-source C was used for the yellowness index measurements. Readings were made at the prescribed 2-degree "observer" angle. Five 0.125 in. (0.318 cm) samples and three 0.075 in. (0.191 cm) samples were tested at zero and at 5-day intervals up to 30 days.

The stabilizing mixtures (formulations) and individual components thereof and the results of the testing of such stabilizers in HDPE and LDPE are presented in the following Table 2:

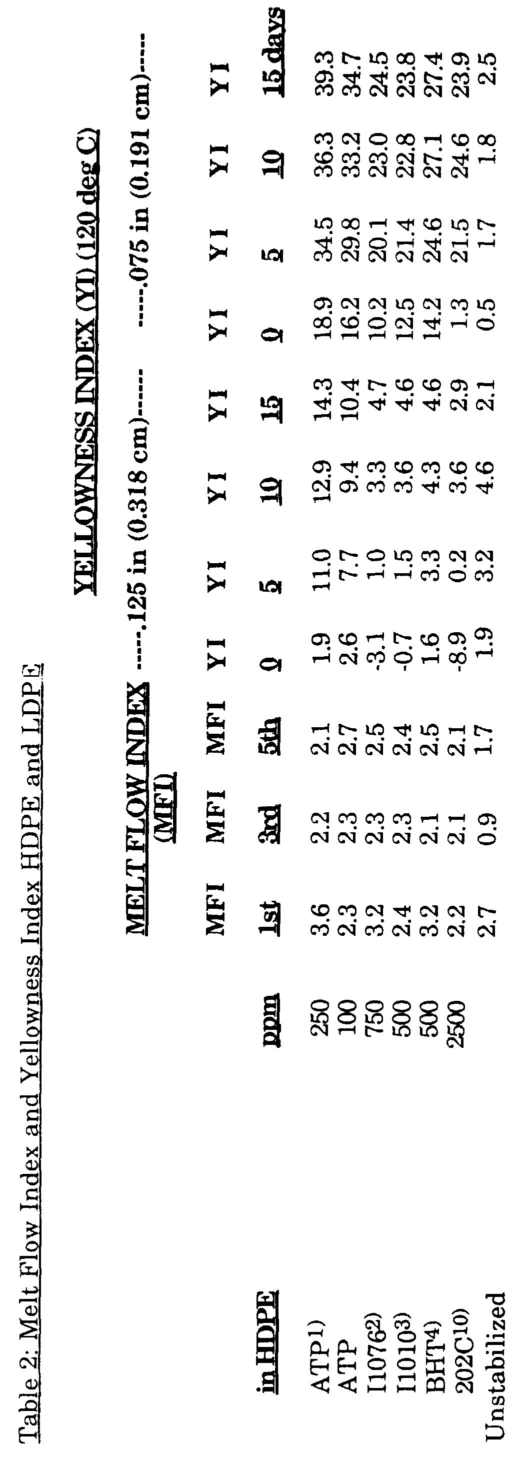

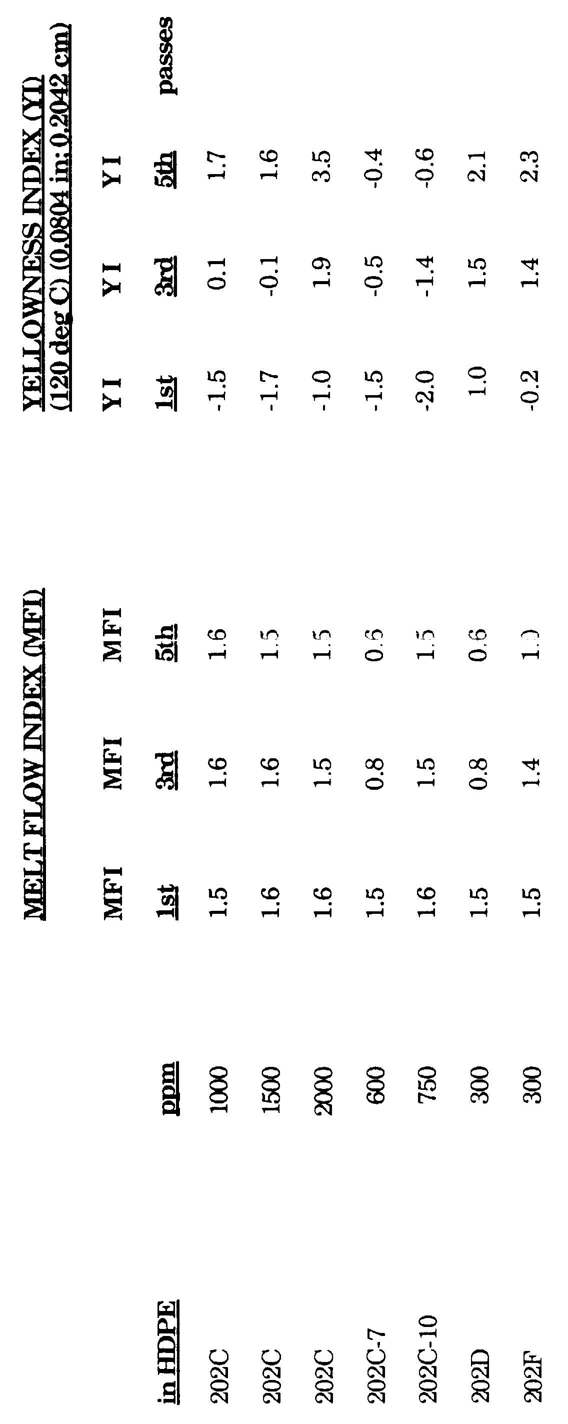

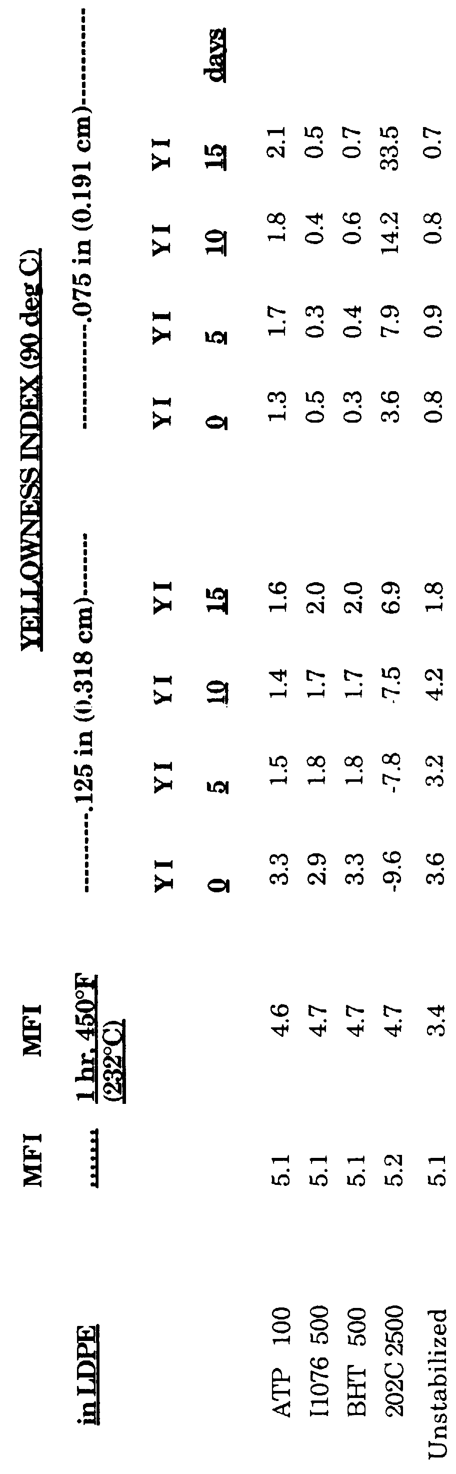

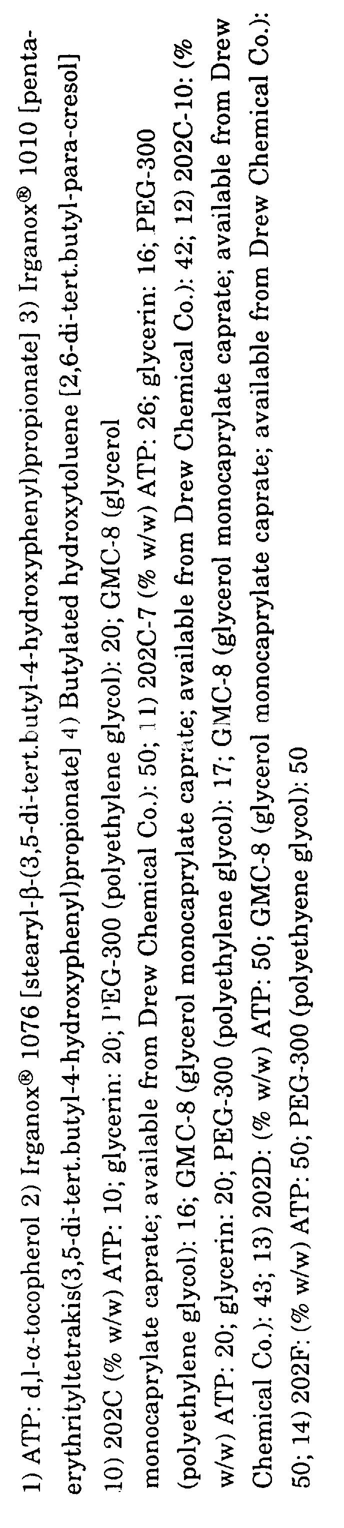

## Claims

1. A stabilizing formulation for plastic materials consisting essentially of
(a) from 10 to 50 percent by weight of α-tocopherol;
(b) up to 50 percent by weight of polyethylene glycol and/or
(c) up to 50 percent by weight of glycerol monocaprylate caprate; and optionally also (d) up to 20 percent by weight of glycerin,
whereby the total percent by weight of the two, three and four components, as appropriate, amounts to 100.

2. A stabilizing formulation according to claim 1, wherein all four components (a), (b), (c) and (d) are present, in the respective amounts 10, 20, 50 and 20 percent by weight, 26, 16, 42 and 16 percent by weight or 20, 17, 43 and 20 percent by weight, or wherein two components are present, being component (a) and either component (b) or component (c) in an amount 50 percent by weight in each case.

3. A plastic material, and any article manufactured therefrom, characterized in that it has been stabilized by incorporation therein of a stabilizing formulation as claimed in claim 1 or 2.

4. A plastic material or article according to claim 3 wherein the stabilizing mixture or formulation is incorporated in a concentration of from 0.001 to 5% by weight based on the weight of the plastic material.

5. A process for producing a stabilizing formulation as claimed in claim 1 or 2 comprising mixing the two, three or four components (a) to (d), as appropriate, with each other in the amounts given in claim 1 or 2 until a clear solution is formed.

6. The use of a stabilizing mixture or formulation as claimed in claim 1 or 2 for stabilizing a plastic material.

## Patentansprüche

1. Stabilisierende Formulierung für Kunststoffe, im wesentlichen bestehend aus
(a) 10 bis 50 Gewichtsprozent α-Tocopherol;
(b) bis 50 Gewichtsprozent Polyethylenglycol und/oder
(c) bis 50 Gewichtsprozent Glycerinmonocaprylatcaprat;
und gegebenenfalls ebenfalls (d) bis 20 Gewichtsprozent Glycerin,
wobei sich die Gesamtmenge in Gewichtsprozent der, falls geeignet, zwei, drei oder vier Komponenten auf 100 beläuft.

2. Stabilisierende Formulierung nach Anspruch 1, wobei alle vier Komponenten (a), (b), (c) und (d) in den betreffenden Mengen von 10, 20, 50 und 20 Gewichtsprozent, 26, 16, 42 und 16 Gewichtsprozent oder 20, 17, 43 und 20 Gewichtsprozent vorliegen oder worin zwei Komponenten vorliegen, wobei Komponente (a) und entweder Komponente (b) oder Komponente (c) in jedem Fall in einer Menge von 50 Gewichtsprozent vorliegen.

3. Kunststoff und daraus hergestellter Gegenstand, dadurch gekennzeichnet, daß er durch Einarbeiten einer stabilisierenden Formulierung nach Anspruch 1 oder 2 stabilisiert wird.

4. Kunststoff oder Gegenstand nach Anspruch 3, wobei das stabilisierende Gemisch oder die stabilisierende Formulierung in einer Konzentration von 0,001 bis 5 Gewichtsprozent, bezogen auf das Gewicht des Kunststoffes, eingearbeitet wird.

5. Verfahren zur Herstellung einer stabilisierenden Formulierung nach Anspruch 1 oder 2, umfassend Vermischen der, falls geeignet, zwei, drei oder vier Komponenten (a) bis (d) miteinander in den in Anspruch 1 oder 2 angegebenen Mengen, bis eine klare Lösung gebildet ist.

6. Verwendung eines stabilisierenden Gemisches oder einer stabilisierenden Formulierung nach Anspruch 1 oder 2 zum Stabilisieren eines Kunststoffes.

## Revendications

1. Formulation stabilisante pour matières plastiques constituée essentiellement de
(a) 10 à 50 % en poids d'a-tocophérol;
(b) jusqu'à 50% en poids de polyéthylèneglycol et/ou
(c) jusqu'à 50% en poids de caprate et monocaprylate de glycérol; et éventuellement également
(d) jusqu'à 20% en poids de glycérine,
dans laquelle le pourcentage total en poids des 2, 3 et 4 composants, comme il est approprié, s'élève à 100.

2. Formulation stabilisante selon la revendication 1, dans laquelle tous les quatre composants (a), (b), (c) et (d) sont présents, dans les quantités respectives de 10, 20, 50 et 20% en poids, de 26, 16, 42 et 16% en poids ou de 20, 17, 43 et 20% en poids, ou dans laquelle deux composants sont présents, soit le composant (a) et soit le composant (b) ou le composant (c), en une quantité de 50% en poids dans chaque cas.

3. Matière plastique, et tout article fabriqué à partir de celle-ci, caractérisée en ce qu'elle a été stabilisée en y incorporant une formulation stabilisante selon la revendication 1 ou 2.

4. Matière plastique ou article selon la revendication 3 dans laquelle le mélange ou formulation stabilisant est incorporé en une concentration de 0,001 à 5% en poids par rapport au poids de la matière plastique.

5. Procédé pour produire une formulation stabilisante selon la revendication 1 ou 2, consistant à mélanger les 2, 3 ou 4 composants (a) à (d) de manière appropriée, les uns avec les autres dans les quantités données dans les revendications 1 ou 2 jusqu'à former une solution transparente.

6. Utilisation d'un mélange ou formulation stabilisant selon les revendications 1 ou 2 pour stabiliser une matière plastique.
